# EUROPEAN PATENT SPECIFICATION

(11) **EP 2 148 123 B1**
(45) Date of publication and mention of the grant of the patent: **27.06.2012**
(21) Application number: 09166213.0
(22) Date of filing: 23.07.2009
(51) Int. Cl.: F16L 55/134, E02B 17/00

(54) **Closure element for a pipe**
Abschließelement für ein Rohr
Elément de fermeture d'un tuyau

(30) Priority: 24.07.2008 NL 2001853
(43) Date of publication of application: 27.01.2010
(73) Proprietor: IHC Handling Systems V.O.F., 2645 EG Delfgauw (NL)
(72) Inventor: Mulderij, Klaas-Jan, 2645 HK Delfgauw (NL); Koster, Hendrik Glijn, 3112 SV Schiedam (NL); van Steijn, Theodorus Gerardus Wilhelmus, 3461 HC Linschoten (NL)
(74) Representative: Ketelaars, Maarten F.J.M.

(56) References cited:
- US-A- 4 262 702
- US-A- 4 349 204
- US-A- 4 887 931

## Description

### Background of the invention

The invention relates to an assembly comprising an elongate pipe which extends along a central axis and a plug which is arranged in or on the pipe and exerts a sealing force on the pipe in order to seal an open pipe end in a fluid-tight manner.

The invention furthermore relates to a method for transporting an assembly according to the invention.

The invention furthermore relates to a method for connecting a plug and a pipe to one another in a fluid-tight manner in an assembly according to the invention.

The invention relates in particular to elongate pipes in offshore structures in which the pipes are used as foundation piles. These foundation pipes can, in practice, be more than 80 metres long and weigh 400-600 tonnes. As the transportation of these elongate and heavy pipes is laborious, there is a need for an alternative.

US 4887931 A discloses a method and a device for towing pipes. The result of the invention is that the pipe acquires just enough buoyancy as is required in order to lift the pipe off the seabed. By lifting the pipe off the bed, the resistance during towing of the pipe is reduced. The sealing means 21 is not designed to transfer a driving force to the pipe, but is designed to make the pipe buoyant. The driving force for towing the pipe runs via the mounting eye 70 and via the screw thread of the pipe.

US 4349204 A discloses a sealing for use with a borehole, in which the sealing is inflatable. The sealing is prevented from being pushed away by providing the sealing with axial slats. A tyre is provided around the sealing which covers part of the slats. When the sealing is inflated, the tyre sealingly engages with the outer wall of the pipe and the inner wall of the borehole. That part of the slats which is not covered by the tyre is in frictional engagement with the inner wall of the borehole for locking the sealing on both sides, so that it does not slip away. US 4349204 A does not disclose driving a pipe, let alone driving a pipe by means of an inflatable sealing, judging by the fact that this sealing already slips away without a driving force being transferred in order to drive a pipe.

US 4262702 A discloses a plug for use with a through pipe. In all embodiments, the plug is provided with locking dogs 27 which secure the plug axially with respect to the plug housing and the pipe with which the plug housing is connected. It is not known from US 4262702 A to transfer a driving force by means of a sealing means. If a driving force is transferred, this takes place via the locking dogs.

### Summary of the invention

It is an object of the invention to provide an alternative solution for the transportation of elongate pipes, such as those used in the offshore industry.

To this end, the invention provides an assembly according to claim 1. As the sealing means transfers or also transmits the driving force, efficient transportation of the pipe is made possible using minimal resources and operations. When the pipe has been rendered fluid-tight by closing the open pipe end by means of the plug, the assembly comprising the pipe and the plug itself has buoyancy, thus creating a good starting position for transporting the assembly over water by means of a towboat.

There is a need to transport the pipe without modifications having to be made to the pipe, such as an eye having to be welded on or a hole having to be provided. If the pipe is used as a foundation pipe, this pipe is driven into the bottom using great force. The acceleration of the foundation pipe may, in practice, be greater than 40 g, as a result of which a weld has to satisfy high demands. For this reason, preferably nothing at all is welded onto the pipe except for the purpose of transportation. The foundation pipes are connected to one another using a connecting piece which typically has an overlap of approximately 9 m with a foundation pipe. The pipe and the connecting piece are connected to one another by means of cement. This cement would run away if a hole were provided in the pipe for the purpose of transportation. In addition, preferably no holes are made in the pipe at all in order not to adversely affect the fatigue load, for example.

In one embodiment, two plugs seal opposite pipe ends in a fluid-tight manner.

In one embodiment, the sealing means comprises a fluid chamber for a pressurized fluid.

Using a fluid chamber and a pressurized fluid makes it possible to apply the sealing force gradually and in a controlled manner. Preferably, the fluid comprises air, more preferably the fluid substantially consists of air. An advantage of the use of compressed air in the fluid chamber is that in case of a leak in the fluid chamber, the pressure drop is relatively small due to the compressibility of air. A filling device which can maintain the pressure in the fluid chamber is thus usually obsolete during transportation.

In one embodiment, the fluid chamber is made from fibre-reinforced rubber. The fibres and the direction thereof give the sealing means the strength required to build up the required pressure.

In one embodiment, the fluid chamber is provided with a connection which is in fluid communication with the fluid chamber in order to pressurize the latter and to build up a sealing force between the pipe wall and the plug wall. By providing a connection, it is possible to pressurize the fluid, or also air, chamber and to measure the pressure and thus have a measure for the sealing force.

In one embodiment, the sealing means comprises several fluid chambers. This guarantees the operational reliability and makes it possible to connect the fluid chambers to one another, if desired.

In one embodiment, the sealing means comprises a fluid chamber support between the outer periphery of the plug wall and the fluid chamber.

In one embodiment, the sealing means comprises a sealing means coating to protect the fluid chamber. Preferably, the sealing means coating comprises fibre-reinforced rubber and the fibre direction is substantially parallel to the central axis so that the strength of the coating is sufficient to transmit the driving force from the plug to the pipe.

In one embodiment, the plug extends outside the pipe and beyond the outer periphery of the pipe. This makes it possible to exert a force on the outer periphery of the pipe. Preferably, the plug is in this case provided with a stop at the pipe periphery in order to exert force on the pipe end substantially in the direction of the central axis.

In one embodiment of the assembly according to the invention, the plug comprises a floating body in order to give the plug itself buoyancy. This is advantageous, for example, when the assembly is hoisted out of the water so that, when the bottom plug is removed from the pipe by removing the sealing force, this plug falls into the water and remains afloat.

In one embodiment of the assembly according to the invention, the plug comprises an actuator in order to exert the sealing force on the pipe. The actuator makes the plug sturdy in use, since the actuator is less vulnerable than, for example, a fluid chamber if the plug hits, for example, an edge of the pipe. The term actuator in this case is inter alia understood to mean a hydraulic cylinder and an electromechanical actuator.

In a specific embodiment of the assembly according to the invention, the actuator is provided near the sealing means at the plug wall, so that the actuator can engage directly with the sealing means in order to produce an improved sealing and drive of the pipe.

In one specific embodiment of the assembly according to the invention, the plug comprises a number of actuators in order to exert the sealing force on the pipe, the actuators, in a more specific embodiment, being evenly distributed along the periphery of the plug wall in order to achieve improved sealing.

In a specific embodiment of the assembly according to the invention, the actuator has a line of action, the line of action of the actuator having a component which is parallel to the plug wall, which is advantageous in respect of the dimensions of the plug; in a more specific embodiment, the line of action of the actuator runs substantially parallel to the plug wall, which is all the more advantageous in respect of the dimensions of the plug.

In a specific embodiment of the assembly according to the invention, the actuator has a leading edge in order to exert the sealing force on the pipe, the sealing means being provided with a trailing edge on which the leading edge of the actuator acts in order to exert the sealing force on the pipe; in a more specific embodiment, the leading edge and/or the trailing edge is completely or partly circumferential around the plug wall, which makes it possible to exert a sealing force which is all the more equal on the pipe.

In a specific embodiment of the assembly according to the invention, the actuator comprises a drive, a drive part which is drivably connected to the drive, the leading edge being provided on the drive part as a result of which it is possible to exert the sealing force more evenly. In a more specific embodiment several actuators are drivably connected to the drive part in order to exert the sealing force all the more evenly on the pipe.

To this end, the invention furthermore provides a method for transporting an assembly according to the invention in which the assembly floats and the driving force is transferred through the sealing means.

To this end, the invention furthermore provides a method for connecting a plug and a pipe to one another in a fluid-tight manner in an assembly according to the invention, in which the plug and the pipe are centred with respect to one another before the sealing force is applied. As a result, the sealing force is distributed evenly across the periphery of the pipe and a good sealing is produced.

In one embodiment, the sealing force is applied by pressurizing a fluid chamber in the sealing means. As a result thereof, the sealing force itself is gradually applied.

The invention furthermore relates to a device provided with one or more of the characterizing features described in the attached description and/or illustrated in the attached drawings.

The invention furthermore relates to a method comprising one or more of the characterizing steps described in the attached description and/or illustrated in the attached drawings.

It will be clear that the various aspects mentioned in this patent application can be combined and can each be considered individually for a divisional patent application.

### Brief description of the figures

In the attached figures, various embodiments of an assembly comprising a pipe and a plug according to the invention are illustrated, in which:
Fig. 1 shows an assembly comprising an elongate pipe and a plug in use behind a towboat;
Fig. 2 shows a cross section of an assembly;
Figs. 3A-D show various views of a plug;
Fig. 4 shows a detail of the sealing means between the plug and the pipe;
Fig. 5 shows a fluid chamber in cross section;
Fig. 6a shows a perspective view of a further embodiment of a plug;
Fig. 6b shows a side view of the plug from Fig. 6a;
Fig. 7 shows a side view of a partially cut-away detail of the plug from Figs. 6a and 6b.

### Description of embodiments

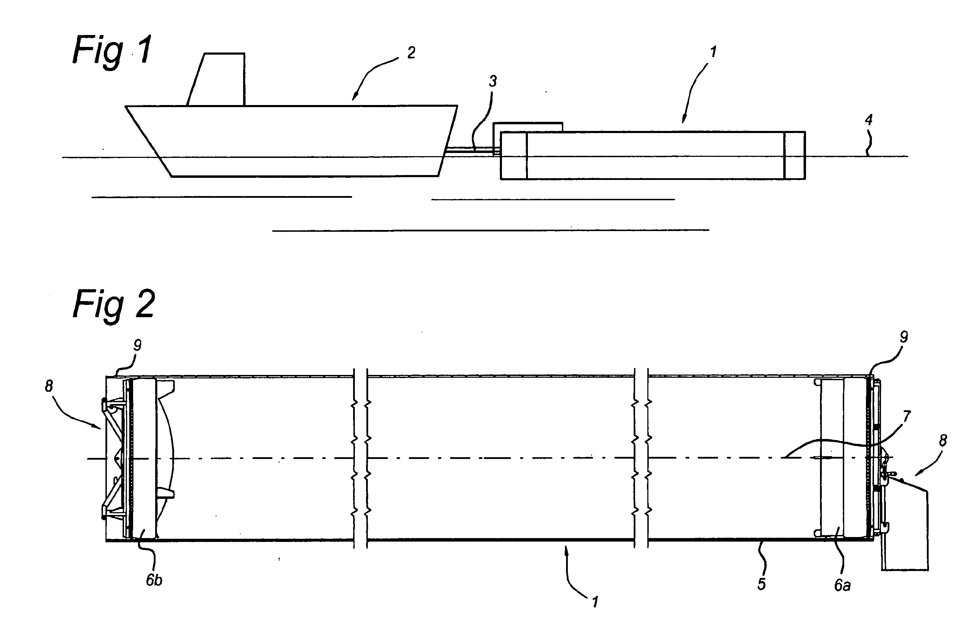

Fig. 1 shows a side view of a pipe and plug in assembly 1. The assembly 1 is connected to the towboat 2 by means of a cable 3 and is being towed by the towboat 2. The assembly 1 floats on the water and is partly above the water line 4.

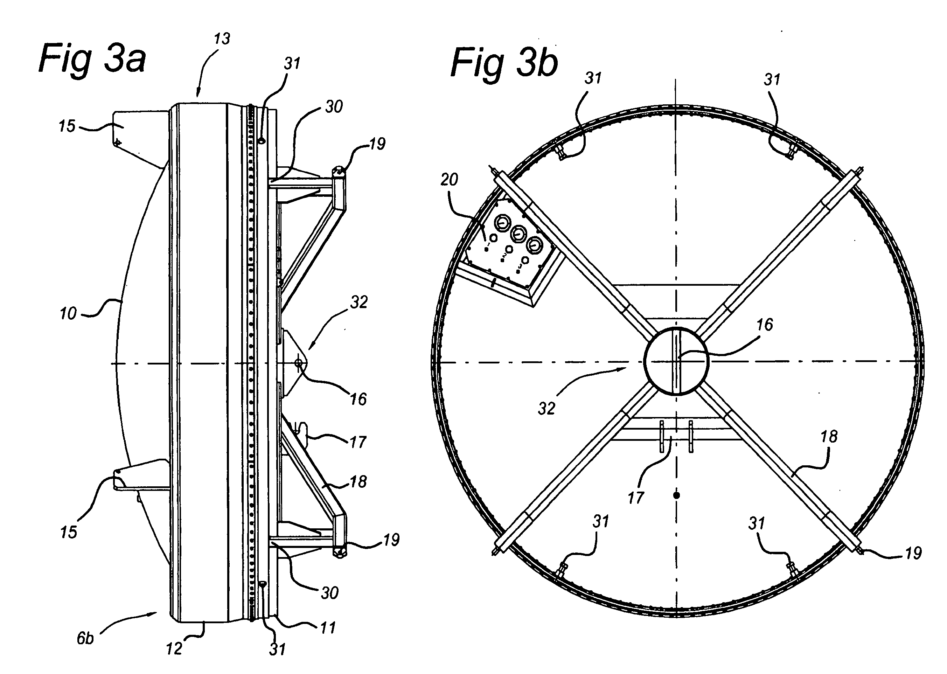

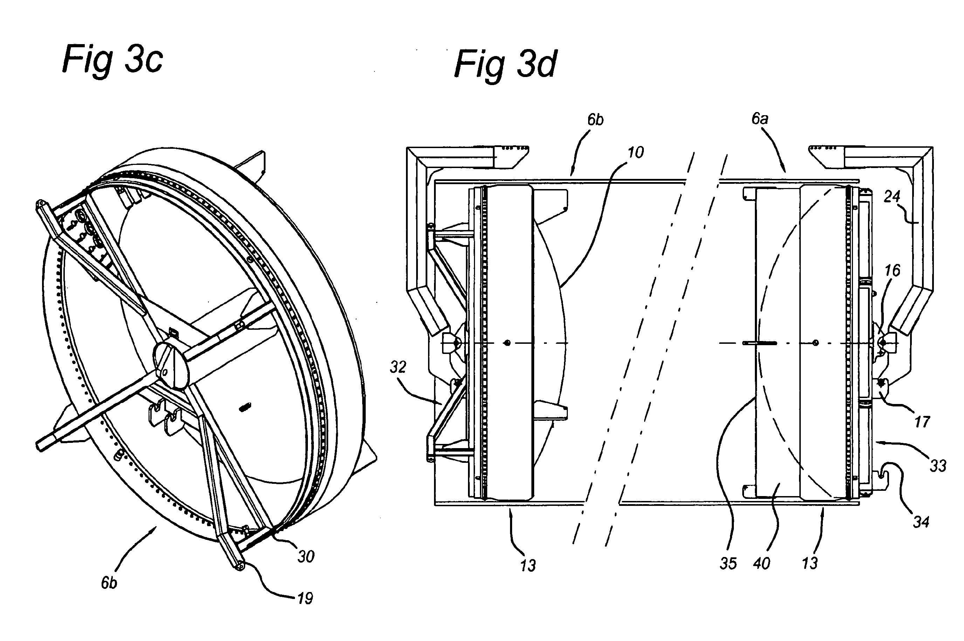

Fig. 2 shows a side view of a cut assembly 1 of a pipe 5 and plugs 6a, 6b. The pipe 5 here is an elongate steel cylindrical pipe which extends along the central axis 7. The pipe 5 is part of, for example, an offshore structure as a foundation for a windmill. In this case, the pipe 5 is open at both pipe ends 8. The pipe 5 is sealed at its pipe ends 8 by plug 6a and 6b, respectively. These plugs 6a, 6b form a seal against the circumferential wall 9 of the pipe 5. The plugs 6a, 6b extend into the pipe ends 8, in this case substantially perpendicular to the centrals axis 7. The assembly 1 of the pipe 5 and the plugs 6a, 6b is fluid-tight as a result of the sealing of the plugs 6a, 6b against the circumferential wall 9 of the pipe 5. The assembly 1 has buoyancy due to the fluid-tight seal and is therefore suitable to be transported by itself over water. The plugs 6a, 6b are in this case provided with a bottom 10 having a radius of curvature. This basket arch bottom 10 can withstand the hydrostatic pressure when one pipe end 8 of a plug 6a, 6b is under water, for example when the assembly 1 is taken out of the water at the pipe end 8 opposite plug 6a, 6b and the opposite plug 6a, 6b is temporarily under water. In practice, only one plug 6a, 6b is provided with a basket arch bottom 10 since usually also only one plug is under water and has to withstand significant hydrostatic pressure when the pipe 5 is being lifted out of the water. The plug 6a is, see Fig. 3d, provided with a floating body 40, here a water-tight compartment enclosed by the basket arch bottom 10 and bottom plate 35 indicated by a broken line. In practice, usually at least one plug 6a is detached from the pipe 5 above the water when the pipe 5 is being lifted out of the water. Due to the fact that it has buoyancy, the plug 6a stays afloat.

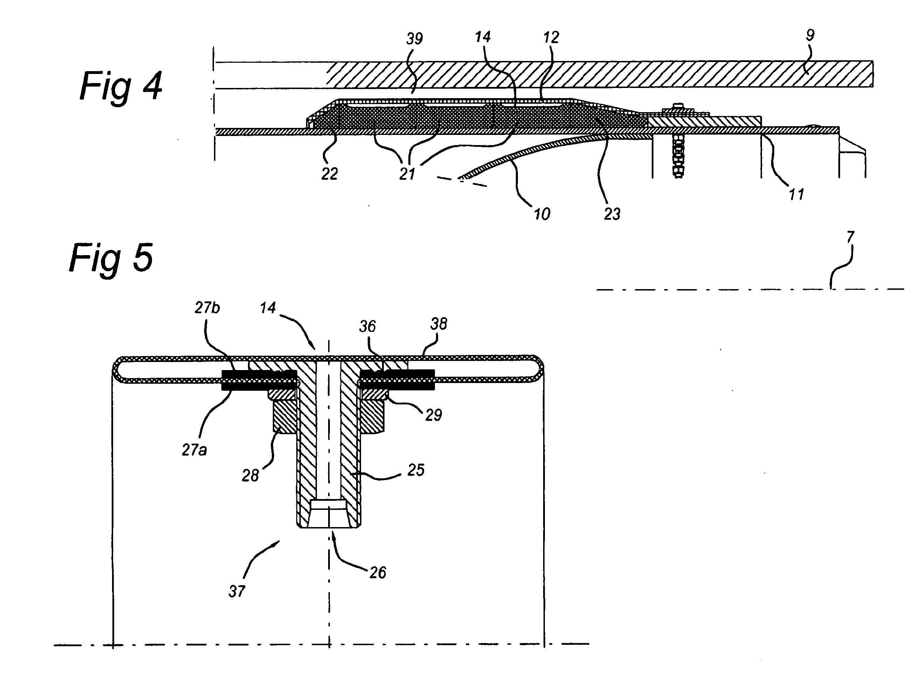

Figs. 3A-D show different views of a plug 6a and 6b from the assembly comprising pipe and plug according to the invention. Fig. 3A shows a side view of a plug. The plug 6b comprises a circumferential plug wall 11 and a bottom 10 which is connected in a fluid-tight manner to the plug wall 11. In this case, the bottom 10 has a radius of curvature in order to withstand hydrostatic pressure when the pipe end 8 of the plug 6b is under water. The plug 6b is provided with sealing means 13 to seal the assembly in a fluid-tight manner. The sealing means 13 comprises an outer sleeve 12 which, when put together, bears against the inner periphery of the pipe wall 9. The plug 6b and the pipe wall 9, when put together, exert a sealing force with respect to one another which is transferred through the sealing means 13. The sealing means 13 and the pipe wall 9 in this case overlap along a sealing length in the direction of the central axis 7. The sealing means 13 here extends on the outer periphery of the plug wall 11. It is also conceivable to have an embodiment of a plug in which a sealing means extends on the inner periphery of the plug. The sealing means 13 here extends along part of the outer periphery of the plug wall 11. A further part of the outer periphery of the plug wall 11, when put together with the pipe 5, lies directly opposite the circumferential inner periphery of the pipe wall 9. The position directly opposite facilitates centring the plug 6a, 6b and the pipe 7 with respect to one another. To this end, the plug 6b is here provided with adjustable screws 31 which extend outside the plug wall 11 in order to adjoin the inner periphery of the pipe wall 9. Following centring of the plug 6a, 6b in the pipe 5, a circumferential gap 39 remains which will be filled by the sealing means 13 when the fluid chamber 14 from Fig. 4 has been pressurized. This gap 39 is in practice approximately 20 mm. The plug 6b comprises a frame 32 which can transfer forces to the plug wall 11. The frame 32 comprises frame parts 18. The frame 32 comprises lifting means 16, 17, 19. The lifting eye 16 and the slot 17 together form a two-point fixing which can transmit a torque to the plug 6b by cooperating with a jib 24. This is advantageous when the plug 6b is pushed along over the central axis 7 into the pipe 5. The plug 6b furthermore comprises ribs 15 which are fixedly connected to the plug wall 11 and the plug bottom 10 and which are provided with a lifting eye. By means of the frame 32, the plug 6b extends beyond the outer periphery of the plug wall 11 and in this case also beyond the pipe wall 9 in order to form a stop 30 opposite the periphery of the pipe wall in the direction of the central axis 7. The stop 30 positions the plug 6b axially in the pipe 5 and prevents the plug 6b from being pushed into the pipe 5 by, for example, hydrostatic pressure on the basket arch bottom 10. Fig. 3C shows a plug 6b in perspective. Fig. 3D shows both plugs 6a and 6b next to one another with the differences in the bottom 10, 35 and in the frame 32, 33. The bottom 10 is better able to withstand hydrostatic pressure than bottom 36. The frame 33 has an additional slot 34 for accommodating, in cooperation with the slot 17 and the lifting eye 16, a rudder in order to influence the navigational properties of the assembly. The rudder also serves to move the centre of gravity away from the central axis 7, so that the assembly adopts a preferred position when the assembly floats in the water and does not rotate about its central axis. It will be clear that the centre of gravity can also be influenced in other ways, as long as the centre of gravity is beyond the central axis 7. Here, the plug 6a, 6b is provided with a control panel 20 by means of which, for example, the pressure in the fluid chambers is adjusted, and/or hydraulics are operated.

Fig. 4 shows a detail of the sealing means 13 between the plug wall 11 and the pipe wall 9. The sealing means 13 here comprises three circumferential fluid ,or also air, chambers 14 which are pressurized after the plug has been introduced into the pipe. When the air chambers 14 are pressurized, a sealing force is built up between the pipe wall 9 and the plug wall 11. The sealing means 13 here furthermore comprises an outer sleeve 12 between the air chambers and the pipe wall 9 to protect the air chambers. The sealing means 13 here comprises a circumferential air chamber bed 21, 22, 23 by means of which the air chamber is positioned at the correct distance from the pipe wall before being pressurized. The air chamber bed 21, 22, 23 here comprises sloping parts 22, 23, inter alia in order to facilitate introduction of the plug into the pipe 5. The air chamber bed 22 is provided with a through-opening to pass a filler piece 37 from Fig. 5 through.

Fig. 5 shows an air chamber 14 in cross section. The air chamber 14 surrounding the central axis 7 is provided with a filler piece 37. The filler piece 37 comprises a filling opening 26 in fluid communication with the air chamber 14. The filler piece comprises a cylindrical part 25, substantially outside the air chamber 14, in this case on the inner periphery of the circumferential air chamber 14. The filler piece comprises a collar 36 which is inside the air chamber and connected in a fluid-tight manner to the inner periphery of the air chamber 14. Here, the filler piece 37 is provided with protective discs 27A, 27B, provided outside and inside the air chamber, respectively, in order to protect the air chamber sleeve 38 around the filler piece 37. Along its outer periphery, the cylindrical part 25 is threaded in order to be able to attach the filler piece in cooperation with the nut and ring.

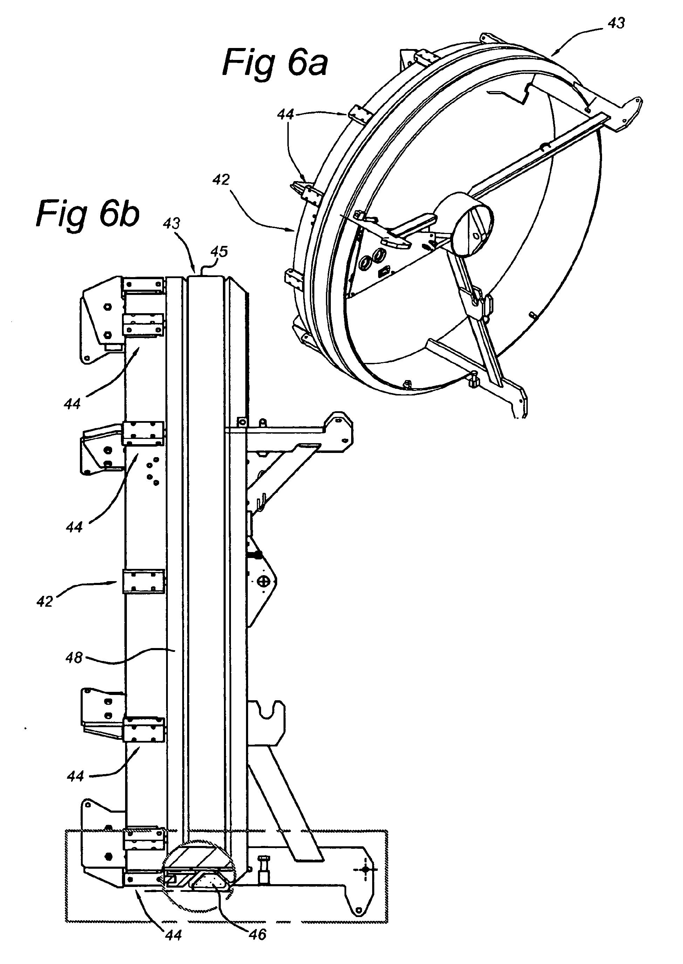

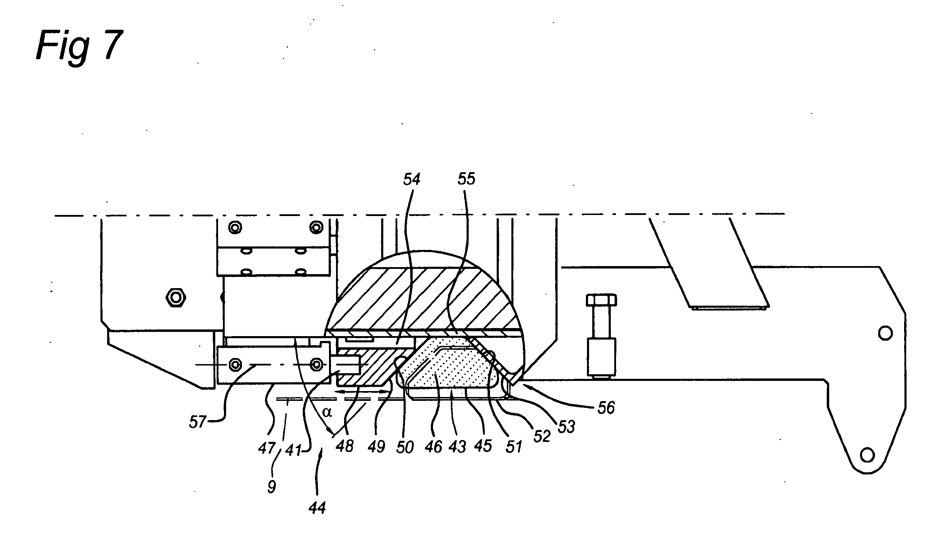

A further embodiment of the plug 6a, 6b from Figs. 2-3 is described with reference to Figs. 6a, 6b and 7, in which the plug is referred to by reference numeral 42. Fig. 6a shows a perspective view of a further embodiment of a plug 42. Fig. 6b shows a side view of the plug 42 from Fig. 6a. Fig. 7 shows a side view of a partly cut-away detail of the plug 42 from Figs. 6a and 6b.

In this case, the plug 42 comprises an actuator 44 in order to exert the sealing force on the pipe 5 from Fig. 2, which pipe 5 is not shown here. The actuator 44 makes the plug 42 more sturdy in use, since the actuator 44 is less vulnerable than, for example, a fluid chamber 14 from Fig. 4 if the plug 42 hits, for example, an edge of the pipe. The term actuator 44 in this case is understood to mean a known means for causing parts to move with respect to one another in maritime technology, such as, inter alia, a hydraulic cylinder and an electromechanical actuator.

In this case, the actuator 44 is provided near the sealing means 43 at the plug wall 55, so that the actuator 44 can engage directly with the sealing means 43 in order to produce an improved sealing and drive of the pipe. The actuator 44 is positioned on the outer periphery of the plug wall 55. The plug 42 here comprises a number of actuators 44 for exerting the sealing force on the pipe. The actuators 44 are evenly distributed over the periphery of the plug wall 55 in order to produce an improved sealing. The actuator 44 has a line of action 57. The line of action 57 of an actuator 44 is the line along which the actuator 44 performs its work. The line of action 57 of the actuator 44 has a component parallel to the plug wall 55, which is advantageous for the dimensions of the plug 42. In this case, the line of action 57 of the actuator 44 runs substantially parallel to the plug wall 55, which is all the more advantageous for the dimensions of the plug 42. The line of action 57 of the actuator 44 substantially parallel to the plug wall 55 is all the more important when the actuator 44 is situated between the plug wall 55 and the pipe wall 9. In Fig. 7, the pipe wall 9 is diagrammatically indicated by broken lines.

The actuator 44 has a leading edge 49 for exerting the sealing force on the pipe. The sealing means 43 has a trailing edge 50 with which the leading edge 49 of the actuator 44 engages in order to exert the sealing force on the pipe. The leading edge 49 and/or the trailing edge 50 is completely or partly circumferential around the plug wall 55, which makes it possible to exert a sealing force which is all the more equal on the pipe. Here, the sealing means 43 has a core 46. The cross section of the core 46 in this case has the shape of a symmetrical trapezium, but other shapes are also conceivable. Along its periphery, on that side which is turned towards the actuator 44, the sealing means 43 has a trailing edge 50. This trailing edge 50 cooperates with the leading edge 49 of the actuator 44. That side of the sealing means 43 which is turned towards the pipe wall 9 is provided with a sealing surface 45 for engaging with the sealing means 43 on the pipe wall 9 in a sealing manner. The sealing means 43 comprises rubber or another suitable material with good properties in respect of sealing. Here, the sealing means 43 consists of rubber. The plug 42 is in this case provided with a profile 56. The profile 56 is in this case fixedly connected to the plug 42. The profile 56 here extends on the outer periphery of the plug 42, along the sealing means 43. The profile 56 extends along on that side of the sealing means 43 which is turned away from actuator 44. The sealing means 43 extends between the actuator 44 and the profile 56. The profile 56 is in this case fixedly connected to the plug 42, specifically the plug wall 55. Here, the profile 56 is provided with a leading edge 53 with which a further trailing edge 51 of the sealing means 43 engages in order to exert the sealing force on the pipe. The leading edge 53 of the profile 56 and/or the further trailing edge 51 of the sealing means 43 are completely or partly circumferential around the plug wall 55, which makes it possible to exert a sealing force which is all the more equal on the pipe. In its sealing position 52, the sealing means 43 sealingly engages simultaneously with the profile 56, specifically with the leading edge 53 of the profile 56, and with the pipe 5 from Fig. 2 for giving buoyancy to the assembly comprising the plug 42 and the pipe 5.

In one specific embodiment, the sealing means 43 and the profile 56, specifically the leading edge 53 of the profile 56, extend along the entire periphery, here the outer periphery, of the plug 42, specifically the plug wall 55, in order for the sealing means 43 to simultaneously sealingly engage more evenly with the plug 42 and the pipe 5 from Fig. 2 for giving buoyancy to the assembly comprising the plug 42 and the pipe 5, in which, in a more specific embodiment, the drive part 48 also extends along the entire periphery of the plug 42 for evenly driving the sealing means 43 and an all the more even sealing engagement of the sealing means 43 with the plug 42 and the pipe 5 from Fig. 2.

Here, the actuator 44 comprises a drive 47, in this case a hydraulic cylinder, in which the movement conversion takes place. The actuator 44 here comprises a drive part 48 for engaging with the sealing means 43 in order to exert the sealing force on the pipe. The drive part 48 comprises steel. In this case, the drive part 48 consists of steel. The actuator 44 here comprises a connecting rod 41, in this case the cylinder rod of the hydraulic cylinder, for drivably connecting the drive part 48 to the drive 47. The drive 47 is fixedly connected to the plug 42, specifically to the plug wall 55, more specifically on the outer periphery of the plug wall 55. The drive part 48 is slidably connected to the plug 42 by means of a slipper 54. The slipper 54 rests on the outer periphery of the plug wall 55. Incidentally, it is also conceivable for the drive part 48 to be connected to the plug wall 55 by means of connecting rods 41 and drives 47 and for the drive part 48 not to be provided with a slipper, but at the location of the slipper 54 runs clear from the plug wall 55. The drive part 48 is movable between an in- and an out-position. In Fig. 7, the drive part 48 is in the in-position. Here, the leading edge 49 of the actuator 44 is provided on that side of the drive part 48 which is turned towards the sealing means 43. The sealing means 43 is movable between a release position shown in Fig. 7 and a sealing position 52 which is indicated by broken lines in Fig. 7. The sealing means 43 is suitable for simultaneously sealingly engaging with the plug 42 and the pipe 5 from Fig. 2 in order to give buoyancy to the assembly comprising the plug 42 and the pipe 5. In the sealing position 52, the sealing means 43 simultaneously sealingly engages with the plug 42 and the pipe 5 from Fig. 2 in order to give buoyancy to the assembly comprising the plug 42 and the pipe 5. The sealing means 43 is movable substantially transversely to the line of action 57 of the actuator 44. In the release position, the sealing means 43, in normal use, does not engage with the pipe. In the sealing position 52, the sealing means 43 engages with the pipe, in this case with the sealing surface 45 on the pipe wall 9, in order to seal the pipe and give the pipe buoyancy and in order to drive the pipe with a driving force. The in-position of the drive part 48 corresponds to the release position of the sealing means 43. The out-position of the drive part 48 corresponds to the sealing position 52 of the sealing means 43.

The leading edge 49 of the drive part 48 and the trailing edge 50 of the sealing means 43 are at an angle α to the plug wall 55. In this case, the angle α is approximately 45°. As the core 46 of sealing means 43 in this case is a symmetrical trapezium, the leading edge 53 of the profile 56 and the further trailing edge 51 of the sealing means 43 are also at an angle α to the plug wall 55. Through adjustment of the angle α, it is possible to optimize the transmission.

In a specific embodiment of the assembly according to the invention, the actuator 44 comprises a drive 47, a drive part 48 which is drivably connected to the drive 47, in which the leading edge 49 is provided on the drive part 48 as a result of which it is possible to exert the sealing force more evenly. In a more specific embodiment, several actuators 44 are drivably connected to the drive part 48 in order to exert the sealing force all the more evenly on the pipe. It will be clear that the above description has been given in order to illustrate the functioning of preferred embodiments of the invention, and not in order to limit the scope of the invention. On the basis of the above explanation, many variations which fall within the scope of the present invention, as defined in the claims, will be obvious to a person skilled in the art.

### LIST OF REFERENCE NUMERALS

| | | | |
|---|---|---|---|
| 1 | assembly | 30 | stop |
| 2 | towboat | 31 | screw |
| 3 | cable | 32, 33 | frame |
| 4 | water line | 34 | slot |
| 5 | elongate pipe | 35 | bottom |
| 6a, 6b | plug | 36 | collar |
| 7 | central axis | 37 | connection, filler piece |
| 8 | open pipe end | 38 | air chamber sleeve |
| 9 | circumferential pipe wall | 39 | gap |
| 10 | plug bottom | 40 | floating body |
| 11 | plug wall | 41 | connecting rod |
| 12 | sealing means coating | 42 | plug |
| 13 | sealing means | 43 | sealing means |
| 14 | fluid chamber | 44 | actuator |
| 15 | rib | 45 | sealing surface |
| 16 | lifting eye | 46 | core of the sealing means |
| 17 | slot | 47 | drive |
| 18 | frame part | 48 | drive part |
| 19 | lifting means | 49, 53 | leading edge |
| 20 | control panel | 50, 51 | trailing edge |
| 21-23 | air chamber support | 52 | sealing position |
| 24 | jib | 54 | drive part guide |
| 25 | cylindrical part | 55 | plug wall |
| 26 | filling opening | 56 | profile |
| 27A, 27B | protective disc | 57 | line of action of actuator |

## Claims

1. Assembly (1) comprising an elongate pipe (5) which extends along a central axis (7) and a plug (6a, 6b) which is arranged on or in the pipe (5) in order to seal an open pipe end (8) in a fluid-tight manner and which exerts a sealing force on the pipe (5), in which the pipe (5) comprises:
- a circumferential pipe wall (9),
- the open pipe end (8),
and in which the plug (6a, 6b) comprises:
- a plug bottom (10) which is substantially perpendicular to the central axis (7),
- a plug wall (11) which is connected in a fluid-tight manner to the plug bottom (10), runs around the central axis (7) and extends substantially perpendicularly to the plug bottom (10) and along the central axis (7),
- a sealing means (13) for adding buoyancy to the assembly, which sealing means is connected to the plug wall (11) and extends in a circular manner between the plug wall (11) and the pipe wall (9),
and in which the sealing means (13) transfers the sealing force **characterized in that** the sealing means (13) is arranged to transmit a driving force substantially perpendicular to the sealing force and along the central axis (7) in order to drive the pipe (5) substantially in the direction of the central axis (7) when the assembly (1) is floating, and **in that** the sealing means extends in a circumferential gap (39) between the plug wall (11) and the pipe wall (9).

2. Assembly according to Claim 1, in which two plugs (6a, 6b) seal opposite pipe ends (8) in a fluid-tight manner.

3. Assembly according to a preceding claim, in which the sealing means (13) comprises a fluid chamber (14), in one embodiment several fluid chambers (14), for a pressurized fluid, and in which in one embodiment the fluid comprises air, and in a further embodiment the fluid is substantially air.

4. Assembly according to a preceding claim, in which the fluid chamber (14) is also made from fibre-reinforced rubber (38).

5. Assembly according to a preceding claim, in which the fluid chamber (14) is provided with a connection (37) which is in fluid communication with the fluid chamber (14) in order to pressurize the latter and to build up a sealing force between the pipe wall (5) and the plug wall (11).

6. Assembly according to a preceding claim, in which the sealing means (13) comprises a fluid chamber support (21) between the outer periphery of the plug wall (11) and the fluid chamber (14).

7. Assembly according to a preceding claim, in which the sealing means (13) comprises a sealing means coating (12) to protect the fluid chamber (14).

8. Assembly according to Claim 7, in which the sealing means coating (12) comprises fibre-reinforced rubber and the fibre direction is substantially parallel to the central axis (7).

9. Assembly according to a preceding claim, in which the plug (6a, 6b) extends outside the pipe (5) and beyond the outer periphery of the pipe (5).

10. Assembly according to Claim 9, in which the plug (6a, 6b) is provided with a stop (30) at the pipe periphery in order to exert force on the pipe end (8) substantially in the direction of the central axis (7).

11. Assembly according to a preceding claim, in which the plug (6a, 6b) comprises a floating body (40) which gives the plug (6a) itself buoyancy.

12. Assembly according to a preceding claim, in which the plug (6a, 6b) comprises an actuator (44) in order to exert the sealing force on the pipe (5).

13. Method for transporting an assembly according to a preceding claim in which the assembly floats and the driving force is transmitted through the sealing means (13).

14. Method for connecting a plug and a pipe to one another in a fluid-tight manner in an assembly according to any one of claims 1 to 12, in which the plug (6a, 6b) and the pipe (5) are centred with respect to one another before the sealing force is applied, and in which, in one embodiment, the sealing force is applied by pressurizing a fluid chamber (14).

## Patentansprüche

1. Anordnung (1) mit einem sich entlang einer Mittelachse (7) erstreckenden länglichen Rohr (5) und einem Verschluss (6a, 6b), der auf oder in dem Rohr (5) angeordnet ist, um ein offenes Rohrende (8) auf eine fluiddichte Weise abzudichten, und eine Dichtkraft auf das Rohr (5) ausübt,
wobei das Rohr (5) aufweist:
- eine Rohrumfangswand (9); und
- das offene Rohrende (8); und
wobei der Verschluss (6a, 6b) aufweist:
- einen sich im Wesentlichen senkrecht zur Mittelachse (7) erstreckenden Verschlussboden (10);
- eine Verschlusswand (11), die mit dem Verschlussboden (10) auf eine fluiddichte Weise verbunden ist, sich um die Mittelachse (7) und im Wesentlichen senkrecht zum Verschlussboden (10) und entlang der Mittelachse erstreckt; und
- eine Dichtungseinrichtung (13) zum Bereitstellen eines Auftriebs für die Anordnung, wobei die Dichtungseinrichtung mit der Verschlusswand (11) verbunden ist und sich auf eine kreisförmige Weise zwischen der Verschlusswand (11) und der Rohrumfangswand (9) erstreckt,
und wobei die Dichtungseinrichtung (13) die Dichtkraft überträgt;
**dadurch gekennzeichnet, dass**
die Dichtungseinrichtung (13) derart angeordnet ist, eine Antriebskraft im Wesentlichen senkrecht zur Dichtkraft und entlang der Mittelachse (7) zu übertragen, um das Rohr (5) im Wesentlichen in Richtung der Mittelachse (7) anzutreiben, wenn die Anordnung (1) schwimmt; und
die Dichtungseinrichtung sich in einem Umfangsspalt (39) zwischen der Verschlusswand (11) und der Rohrumfangswand (9) erstreckt.

2. Anordnung nach Anspruch 1, wobei zwei Verschlüsse (6a, 6b) gegenüberliegende Rohrenden (8) auf eine fluiddichte Weise abdichten.

3. Anordnung nach einem der vorangehenden Ansprüche, wobei die Dichtungseinrichtung (13) eine Fluidkammer (14), in einer Ausführungsform mehrere Fluidkammern (14), für ein unter Druck stehendes Fluid aufweist, und wobei das Fluid in einer Ausführungsform Luft aufweist und das Fluid in einer anderen Ausführungsform im Wesentlichen aus Luft besteht.

4. Anordnung nach einem der vorangehenden Ansprüche, wobei die Fluidkammer (14) auch aus faserverstärktem Gummi (38) hergestellt ist.

5. Anordnung nach einem der vorangehenden Ansprüche, wobei die Fluidkammer (14) eine Verbindung (37) aufweist, die mit der Fluidkammer (14) in Fluidkommunikation steht, um diese unter Druck zu setzen und eine Dichtkraft zwischen der Rohrwand (5) und der Verschlusswand (11) aufzubauen.

6. Anordnung nach einem der vorangehenden Ansprüche, wobei die Dichtungseinrichtung (13) eine Fluidkammerstütze (21) zwischen dem Außenumfang der Verschlusswand (11) und der Fluidkammer (14) aufweist.

7. Anordnung nach einem der vorangehenden Ansprüche, wobei die Dichtungseinrichtung (13) eine Dichtungseinrichtungsumhüllung (12) zum Schützen der Fluidkammer (14) aufweist.

8. Anordnung nach Anspruch 7, wobei die Dichtungseinrichtungsumhüllung (12) faserverstärkten Gummi aufweist, wobei die Faserrichtung sich im Wesentlichen parallel zur Mittelachse (7) erstreckt.

9. Anordnung nach einem der vorangehenden Ansprüche, wobei der Verschluss (6a, 6b) sich außerhalb des Rohrs (5) und über den Außenumfang des Rohrs (5) hinaus erstreckt.

10. Anordnung nach Anspruch 9, wobei der Verschluss (6a, 6b) einen Anschlag (30) am Rohrumfang aufweist, um eine Kraft auf das Rohrende (8) im Wesentlichen in Richtung der Mittelachse (7) auszuüben.

11. Anordnung nach einem der vorangehenden Ansprüche, wobei der Verschluss (6a, 6b) einen Schwimmkörper (40) aufweist, der dem Verschluss (6a) selbst Auftrieb verleiht.

12. Anordnung nach einem der vorangehenden Ansprüche, wobei der Verschluss (6a, 6b) einen Aktor (44) zum Ausüben der Dichtkraft auf das Rohr (5) aufweist.

13. Verfahren zum Transportieren einer Anordnung nach einem der vorangehenden Ansprüche, wobei die Anordnung schwimmt und die Antriebskraft über die Dichtungseinrichtung (13) übertragen wird.

14. Verfahren zum Verbinden eines Verschlusses und eines Rohrs miteinander auf eine fluiddichte Weise in einer Anordnung nach einem der Ansprüche 1 bis 12, wobei der Verschluss (6a, 6b) und das Rohr (5) relativ zueinander zentriert werden, bevor die Dichtkraft ausgeübt wird, und wobei in einer Ausführungsform die Dichtkraft ausgeübt wird, indem eine Fluidkammer (14) unter Druck gesetzt wird.

## Revendications

1. Ensemble (1) comprenant un tuyau allongé (5) s'étendant le long d'un axe central (7) et un bouchon (6a, 6b) disposé sur ou dans le tuyau (5) afin d'obturer une extrémité ouverte du tuyau (8) de manière étanche aux fluides et qui exerce une force obturante sur le tuyau (5), dans lequel le tuyau (5) comprend :
- une paroi de tuyau circonférentielle (9),
- l'extrémité ouverte de tuyau (8),
et dans lequel le bouchon (6a, 6b) comprend :
- un fond de bouchon (10) sensiblement perpendiculaire à l'axe central (7),
- une paroi de bouchon (11) raccordée de manière étanche aux fluides au fond de bouchon (10) et qui tourne autour de l'axe central (7) et s'étend sensiblement perpendiculairement au fond de bouchon (10) et le long de l'axe central (7),
- un élément d'obturation (13) pour conférer à l'ensemble davantage de flottabilité, lequel élément d'obturation est raccordé à la paroi de bouchon (11) et s'étend de manière circulaire entre la paroi du bouchon (11) et la paroi du tuyau (9),
et dans lequel l'élément d'obturation (13) transfère la force obturante, **caractérisé en ce que** l'élément d'obturation (13) est disposé de façon à transmettre une énergie motrice sensiblement perpendiculaire à la force obturante et le long de l'axe central (7) afin de pousser le tuyau (5) sensiblement dans la direction de l'axe central (7) lorsque l'ensemble (1) flotte, et **en ce que** l'élément d'obturation s'étend dans un espace circonférentiel (39) prévu entre la paroi du bouchon (11) et la paroi du tuyau (9).

2. Ensemble selon la revendication 1, dans lequel deux bouchons (6a, 6b) obturent les extrémités opposées d'un tuyau (8) de manière étanche aux fluides.

3. Ensemble selon l'une quelconque des revendications précédentes, dans lequel l'élément d'obturation (13) comprend une chambre à fluide (14), ou dans une forme de réalisation une pluralité de chambres à fluide (14), pour un fluide sous pression, et dans lequel, dans une forme de réalisation, le fluide comprend de l'air, et dans une autre forme de réalisation, le fluide est en grande partie de l'air.

4. Ensemble selon l'une quelconque des revendications précédentes, dans lequel la chambre à fluide (14) est également constituée d'un caoutchouc renforcé par des fibres (38).

5. Ensemble selon l'une quelconque des revendications précédentes, dans lequel la chambre à fluide (14) est équipée d'un raccord (37) en communication de fluide avec la chambre à fluide (14) afin de mettre celle-ci sous pression et de créer une force obturante entre la paroi du tuyau (9) et la paroi du bouchon (11).

6. Ensemble selon l'une quelconque des revendications précédentes, dans lequel l'élément d'obturation (13) comprend un support de chambre à fluide (21) prévu entre la périphérie extérieure de la paroi de bouchon (11) et la chambre à fluide (14).

7. Ensemble selon l'une quelconque des revendications précédentes, dans lequel l'élément d'obturation (13) comprend un revêtement hermétisant (12) afin de protéger la chambre à fluide (14).

8. Ensemble selon la revendication 7, dans lequel le revêtement hermétisant (12) comprend un caoutchouc renforcé par des fibres, la direction des fibres étant sensiblement parallèle à l'axe central (7).

9. Ensemble selon l'une quelconque des revendications précédentes, dans lequel le bouchon (6a, 6b) s'étend à l'extérieur du tuyau (5) et au-delà de la périphérie extérieure du tuyau (5).

10. Ensemble selon la revendication 9, dans lequel le bouchon (6a, 6b) est pourvu d'une butée (30) disposée en périphérie du tuyau de façon à exercer une force sur l'extrémité de tuyau (8) sensiblement dans la direction de l'axe central (7).

11. Ensemble selon l'une quelconque des revendications précédentes, dans lequel le bouchon (6a, 6b) comprend un corps flottant (40) qui confère une flottabilité autonome au bouchon (6a).

12. Ensemble selon l'une quelconque des revendications précédentes, dans lequel le bouchon (6a, 6b) comprend un actionneur (44) destiné à appliquer la force obturante sur le tuyau (5).

13. Procédé de transport d'un ensemble selon l'une quelconque des revendications précédentes, dans lequel l'ensemble flotte et la force motrice est transmise via l'élément d'obturation (13).

14. Procédé de raccordement réciproque d'un bouchon à un tuyau de manière étanche aux fluides dans un ensemble selon l'une quelconque des revendications précédentes 1-12, dans lequel le bouchon (6a, 6b) et le tuyau (5) sont centrés l'un par rapport à l'autre avant d'exercer la force obturante, et dans lequel, dans une forme de réalisation, la force obturante est appliquée par mise sous pression d'une chambre à fluide (14).
